# EUROPÄISCHE PATENTSCHRIFT

(11) **EP 0 461 449 B1**
(45) Veröffentlichungstag und Bekanntmachung des Hinweises auf die Patenterteilung: **07.02.1996**
(21) Anmeldenummer: 91108539.7
(22) Anmeldetag: 25.05.1991
(51) Int. Cl.: G01N 27/416

(54) **Messelektrode für eine elektrochemische Gassmesszelle**
Indicator electrode for an electrochemical gas measuring cell
Electrode indicatrice pour une cellule électrochimique de mesure de gaz

(30) Priorität: 09.06.1990 DE 4018597
(43) Veröffentlichungstag der Anmeldung: 18.12.1991
(73) Patentinhaber: Drägerwerk Aktiengesellschaft, D-23542 Lübeck (DE)
(72) Erfinder: Kiesele, Herbert, Dr., W-2400 Lübeck (DE); Sohège, Jürgen, Dr., W-2400 Lübeck (DE)

(56) Entgegenhaltungen:
- EP-A- 0 205 399
- EP-A- 0 299 780
- INDUSTRIAL LABORATORY Bd. 45, Nr. 7, Juli 1979, NEW YORK Seiten 735 - 737 V. N. STOROZHENKO ET AL. 'electrochemical oxygen analyser'
- PATENT ABSTRACTS OF JAPAN vol. 10, no. 183 (P-472)26. Juni 1986 & JP-A-61 030 756

## Beschreibung

Die Erfindung betrifft einen Meßfühler zum Nachweis von gasförmigen Bestandteilen mit Hilfe einer elektrochemischen Meßzelle, welche eine Meßelektrode und eine Gegenelektrode in einem Elektrolyten besitzt, wobei der Elektrolytraum gegenüber der die Nachweisbestandteile enthaltenden Umgebung über eine für die Bestandteile permeablen, für den Elektrolyten undurchlässigen Membran abgeteilt ist, welche auf ihrer dem Elektrolyten zugewandten Fläche mit einem permeablen, elektrisch leitfähigen Belag versehen ist, wobei die Membran mit dem Belag auf einem Stützkörper aufgebracht ist, der mindestens einen mit dem Elektrolyten gefüllten Durchbruch aufweist, durch den der Elektrolyt bis zum Belag vordringt, der zur Bildung als Meßelektrode mit einem elektrischen Signalanschluß in Verbindung steht. Außerdem wird ein Verfahren zur Herstellung einer Meßelektrodenstruktur für einen derartigen Meßfühler angegeben.

In der JP-A-61030756 wird ein Aufbau für eine elektrochemische Meßzelle mit einer Abfolge entsprechend dem Diffusionsweg des Nachweisbestandteils mit folgenden Bauelementen angegeben: Einem Polyamidfilm mit gebundenem Enzym, einem Polyaminosiloxanfilm, einem Elektrolyten, bandförmigen Elektroden und einem Stützkörper.

Bei Meßfühlern, wie sie z.B. aus der US-PS 3 767 552 bekannt sind, sind die Meßeigenschaften wesentlich dadurch bestimmt, daß die Diffusionsmembran in enger Nähe zu dem als Elektrode ausgebildeten metallischen Stützkörper bleibt, von welchem aus die Meßsignale an eine Auswerteeinheit weitergeführt werden. Dazu werden aufwendige Klemm- und Dichtmaßnahmen notwendig, wodurch die auf den Stützkörper aufgelegte Membran über diese aufgespannt ist. Zudem muß im eingebauten Zustand auch noch für eine ausreichende Dichtung des Elektrolytraumes gegenüber dem übrigen Meßfühlergehäuse gesorgt werden. Dabei ist darauf zu achten, daß die Membran während des Einspannvorganges nicht so sehr gedehnt wird, daß sich ihre Diffusionseigenschaften für den nachzuweisenden Gasbestandteil unerwünscht ändern, oder daß es zu kapillarförmigen Dehnungsrissen kommt, aus denen der Elektrolyt im Laufe der Lagerung oder des Betriebes unmerklich austreten kann. Da derartige Meßfühler in der sogenannten diffusionsstrombegrenzten Betriebsart arbeiten, ist die Signalgüte im wesentlichen von der Diffusionseigenschaft der Membran für den nachzuweisenden Gasbestandteil, der Elektrodenstrukturierung und dem Zusammenwirken von Membran und Meßelektrode abhängig. Um daher bei einer Änderung der Gaskonzentration eine möglichst kurze Ansprechzeit für den Meßfühler zu ermöglichen, ist es wünschenswert, die Diffusionsmembran als Diffusionsbarriere möglichst dünn und aus einem Material mit einer hohen Diffusionskonstanten auszuwählen. Die Handhabung einer solch extrem dünnen Membran ist besonders schwierig, und vor allem während des Einbaus sind die Dichtungsmaßnahmen in hohem Maße aufwendig.

Eine weitere nachteilige Beeinflussung des Meßsignals wird durch den Umstand verursacht, daß die auf den Stützkörper aufgelegte Membran Bereiche zwischen der Membran und dem Stützkörper bildet, in die auch bei gespannter Membran Elektrolytflüssigkeit eintritt, welche zwar die Reaktionsprodukte aus der Umsetzung des nachzuweisenden Gasbestandteils aufnimmt, in der aber ein nachfolgender Abtransport dieser Reaktionsprodukte und ein Ersetzen durch neue frische Elektrolyt-Flüssigkeit behindert ist. Dies führt zu Fehlmessungen infolge von sich ändernden Transportkoeffizienten der an der Reaktion beteiligten Komponenten im Elektrolyten. Zudem können sich zwischen Membran und Stützkörper Elektrolytbereiche bilden, die zwar am Gasaustausch durch die Membran beteiligt sind, bei denen aber für die Abreaktion an der Elektrode ein langer Diffusionsweg in diesem Elektrolytbereich vorliegt. Dies führt zu einer Verlängerung der Ansprechzeit und zu einer verzögerten Einstellung des stabilen Endmeßwertes ("Einkriechen").

Besondere Handhabungsschwierigkeiten ergeben sich bei Anordnungen mit Membranen, die einseitig z.B. mittels eines Sputtervorgangs mit einem leitfähigen Belag beschichtet sind. Dies Verfahren führt nicht zu einer besonders guten Haftfähigkeit zwischen Membran und Belag, welche sich insbesondere bei dem notwendigen Einbringen in die Anordnung und Tränken mit Elektrolyten bemerkbar macht. Es kommt häufig zum Ablösen des Belags von der Membran, so daß eine enge Nähe des Belags zu der Membran nicht mehr gewährleistet ist. Dies erhöht den Ausschuß an ungeeigneten Gasmeßzellen bei dem ohnehin schon aufwendigen Herstellungsverfahren. Zudem ist die Handhabung solcher besputterten Membranen recht problematisch, da durch das Sputtern Spannungen in der Membran erzeugt werden, die bei der weiteren Handhabung eine faltenfreie Befestigung erschweren.

Der vorliegenden Erfindung liegt somit die Aufgabe zugrunde, einen Meßfühler der genannten Art so zu verbessern, daß eine einfachere Handhabung zur Bedeckung des Elektrolytraumes mit einer Membran ohne Gefährdung ihrer mechanischen Stabilität möglich ist, wobei im Betrieb die Nachweisreaktion vollständig an derjenigen Elektrodenoberfläche ablaufen soll, welche in direkter elektrochemischer Austauschverbindung mit dem Elektrolytvorrat steht.

Zur Lösung der Aufgabe ist eine Vorrichtung gemäß Anspruch 1 vorgesehen.

Der Vorteil der Erfindung liegt im wesentlich darin, daß der eine Haftverbindung eingehende Belag ein Vordringen des Elektrolyten in den kapillaren Zwischenraum zwischen Belag und Stützkörper verhindert. Damit sind Fehlmessungen infolge von Kriechströmen sowohl der im Elektrolyten in gelöster Form vorliegenden, gasförmigen Nachweissubstanz als auch der nach erfolgter Reaktion in den Elektrolyten diffundierenden Reaktionsprodukte ausgeschaltet.

Im Bereich des Durchbruchs stellt der Belag die Meßelektrode dar. Durch die Haftverbindung zwischen Belag und Membran können die Vorzüge genutzt werden, die metallisierte Membranen haben (definierte Diffusionswege, keine Signalabhängigkeit von Elektrolytschichtdicken zwischen Membran und Stützkörper, gute Ankopplung an das Elektrolytreservoir), zusätzlich ist wegen der Haftverbindung Belag - Stützkörper eine gute Formstabilität gewährleistet, und die Handhabbarkeit wird verbessert. Wenn der Stützkörper noch dazu aus Metall gefertigt ist, arbeitet er als eine Elektrode, in deren vom Durchbruch umschlossenen Bereich die vorliegenden gasförmigen Nachweissubstanzen umgesetzt werden.

Dadurch ist sichergestellt, daß die elektrochemische Nachweisreaktion ausschießlich in dem von dem Belag und dem Stützkörper umschlossenen Bereich des Elektrolytraumes abläuft. Die Membran kann jetzt direkt auf dem Belag mit einem geeigneten Abscheideverfahren aufgebracht sein, und braucht nicht beispielsweise über eine Spannvorrichtung auf den Stützkörper gelegt zu werden, wodurch eine Dehnung vermieden wird, da der Belag als Haftverbinder gleichzeitig für ein planes Anliegen der Membran auf dem Stützkörper sorgt. Außerdem kann eine Abdichtung der Membran auf dem Stützkörper entfallen, da ein Vordringen des Elektrolyten zwischen Stützkörper und Membran aus dem Elektrolytraum verhindert ist. Es reicht jetzt aus, den leichter handhabbaren Stützkörper mitsamt der aufgebrachten Membran abzudichten. Dadurch können aufwendige und in ihrer Handhabung umständlich zu bewerkstelligende Dichtungsmaßnahmen zwischen der Membran und dem Stützkörper entfallen.

Als besonderer Vorteil für die Erfindung ist weiterhin anzusehen, daß die elektrische Kontaktierung der Elektrode sehr unproblematisch ist: Ist der Stützkörper elektronischer Leiter, kann die Elektrodenableitung beliebig an dem Körper plaziert werden. Im Falle eines Nichtleiters als Stützkörper sind stirnflächig abseits der Durchbrüche aureichend Möglichkeiten, durch die Membran hindurch den Belag zu kontaktieren, ohne die Funktion der Anordnung zu beeinflussen.

Ein Verfahren zum Herstellen einer Meßelektrodenstruktur mit den erfindungsgemäßen Merkmalen ist in Anspruch 2 definiert.

Bei einem derartigen Verfahren zur Herstellung einer Meßelektrodenstruktur kann man nunmehr die Materialwahl sowohl für den Stützkörper als auch für den aufzubringenden Belag und die zu beschichtende Membran dahingehend optimieren, daß eine bestmögliche Haftung der Schichten untereinander und auf dem Stützkörper erreicht wird, und daß die Bildung der Meßelektrodenstruktur durch geeignete, aufeinanderfolgende Beschichtungsverfahren vorgenommen wird. Die Beschichtung des auf den Stützkörper aufgebrachten Belags mit der Membran erlaubt die Verwirklichung dünnster Membrandicken, was für den Meßbetrieb äußerst geringe Ansprechzeiten zur Folge hat. Typische Schichtdicken für den Belag liegen zwischen 10 und 1000 Nanometer, die Membran ist typischerweise zwischen 0,5 und 15 Mikrometer dick. Eine in der Handhabung und zur Erzielung eines späteren Meßerfolges unsichere Belegung des Stützkörpers mit einer beschichteten Membran kann entfallen. Sind die beiden Schichten auf dem Stützkörper aufgebracht, kann er von seiner Rückseite her durch geeignete Verfahren in ausgewählten Bereichen ausgedünnt werden, und zwar soweit, daß der auf der Vorderseite aufgebracht Belag freigelegt wird. An den nicht freigelegten Stellen bleibt die Membran auf dem Stützkörper haften und bildet dort mit dem Belag die für den Elektrolyten undurchlässigen Haftbereiche. Der für den Zugang des Elektrolyten zur Membran erforderliche Durchbruch kann somit an einem fertig beschichteten Stützkörper erfolgen, so daß nunmehr eine stabile und leicht für eine nachfolgende mechanische Bearbeitung handhabbare Meßelektrodenstruktur gewonnen wird.

Bei Benutzung stärkerer Stützkörper ist es zweckmäßig, den Durchbruch in dem Stützkörper vor Aufbringung des Belags durch eine vorbereitende Anarbeitung soweit vorzubilden, daß noch eine für die Aufbringung des Belags und der Membranschicht genügend stabile Stützschicht mit geschlossener Oberfläche stehenbleibt. Man kann somit den bloßen Stützkörper von seiner Unterseite her strukturell soweit abtragen, daß der geometrische Ort für den Durchbruch schon vorbestimmt ist, dieser jedoch noch nicht vollständig durch den Stützkörper hindurchdringt. Somit ist der mit einem vorstrukturierten Durchbruch versehene Stützkörper immer noch in der Lage, einen geschlossenen Belag und eine geschlossene Membranschicht auf seiner Vorderseite aufzunehmen, wobei dann anschließend die weitere Freilegung des Durchbruchs bis hin zum Belag nur noch in einem vergleichsweise kurzzeitigen Bearbeitungsschritt erzielt werden kann. Diese Vorgehensweise ist insbesondere dann vorteilhaft, wenn vermieden werden soll, daß durch die Freilegung des Durchbruches die aufgetragenen Belag- und Membranschichten belastet werden. Das Freilegen dickerer, schon mit dem Belag versehener Schichten im Stützkörper kann bei dann auftretendem uneinheitlichen Abtragen zu Spannungen im Stützkörper führen, die eine Verletzung des Membran-Belag-Aufbaus zur Folge haben.

Eine besonders günstige Ausgestaltung des Durchbruches ist darin zu sehen, daß eine Vielzahl von im Stützkörper freigelegten Kanäle gebildet werden. Diese Kanäle sind untereinander durch Stege abgeteilt, auf deren Stirnflächen der Belag haftet, so daß der Elektrolyt im Kanalvolumen bis hin zum Belag vordringen, nicht jedoch zwischen Belag und Stirnfläche der Stege eindringen kann. Die nachzuweisenden Gasmoleküle können daher vollständig innerhalb des Kanalvolumens abreagieren, indem sie an der Dreiphasengrenze Elektrolyt/Belag/Membran umgebildet und ihre Reaktionsprodukte vollständig abgetragen werden und der verbrauchte Elektrolyt durch den Vorrat im Elektrolytraum erneuert werden kann. Man erhält somit in jedem Kanal eine geschlossene, für den Elektrolyten undurchdringbare Metallauskleidung, an welcher die Nachweisreaktion vollständig ablaufen kann.

Um den Stützkörper zur Bildung des Durchbruches anzuarbeiten oder den Durchbruch in einem Arbeitsgang durchführen zu können, ist eine Ätztechnik anwendbar. Dazu besteht der Stützkörper aus einem Material, welches durch ein Ätzverfahren abgetragen werden kann, wobei der Belag jedoch aus einem solchen Material bestehen muß, das dem angewandten Ätzverfahren widersteht. Das ist günstigerweise dann der Fall, wenn der Belag aus einem edleren Metall besteht als der Stützkörper. Der Stützkörper wird dann soweit abgetragen, bis der Belag freigelegt ist; sobald dies geschehen ist, hört der Ätzvorgang von selbst auf, ohne daß der Belag angegriffen wird.

Der Belag wird zweckmäßigerweise durch eine galvanische Abscheidung aufgetragen. Durch diesen Vorgang wird eine besonders gute Haftung des Belages auf dem Stützkörper erzielt, und er bildet dann eine gute Grundlage für die nachfolgende Aufbringung der Membranschicht, die zweckmäßigerweise über einen Polymerisationsvorgang aufgetragen wird. Dieser stellt eine besonders innige Verbindung zwischen Membranschicht und Belag her, die auch bei nachfolgender Handhabung des beschichteten Stützkörpers haften bleibt.

Durch das erfindungsgemäße Herstellungsverfahren für die Meßelektrodenstruktur ist es möglich, eine Vielzahl von Methoden für die Aufbringung von Belag und Membran anzuwenden, die alle die innige Haftung von Belag und Membran aufeinander verwirklichen: Neben der galvanischen Abscheidung kann auch ein Sputtervorgang für die Erzeugung des Belags gewählt werden. Die Membran kann entweder durch Plasmapolymerisation oder durch Elektropolymerisation gebildet werden. Beide Polymerisationsverfahren geben gut haftende Schichtverbindungen. Als weitere Verfahren zur Aufbringung der Membran können die Tauchfilm- bzw. Sinterfilmherstellung eingesetzt werden; ebenfalls geeignet ist das Spin-coating-Verfahren, welches gute Schichten im Dickenbereich von 1 Mikrometer liefert. Eine solche Membranschicht ist auch besonders formstabil, so daß größere Durchbrüche mit einer Fläche von bis zu einigen Quadratzentimetern erreicht werden können, ohne daß eine zusätzliche Abstützung für die freistehende Membran vorgesehen werden muß.

Durch die Menge der möglichen anwendbaren Verfahren zur Aufbringung von Membran und Belag sind auch erheblich mehr Substanzen hierfür verwendbar, so daß eine günstige Anpassung von verwendetem Material und eingesetztem Beschichtungsverfahren aufeinander abgestimmt werden kann.

Ein Ausführungsbeispiel der Erfindung wird anhand einer schematischen Zeichnung dargestellt und im folgenden näher erläutert.

Es zeigen
- Figur 1 bis 4: die wesentlichen Verfahrensschritte zur Herstellung eines Meßfühlers,
- Figur 5: als Einzelheit Z aus Fig. 4 den Schnitt eines Kanals im Stützkörper,
- Figur 6: einen zusammengebauten Meßfühler.

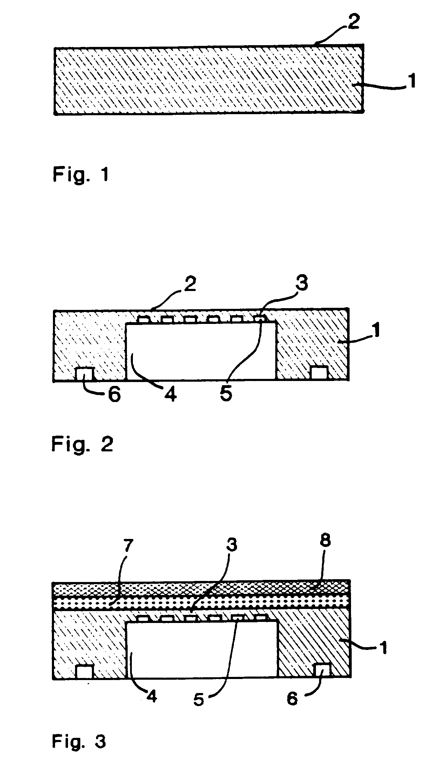

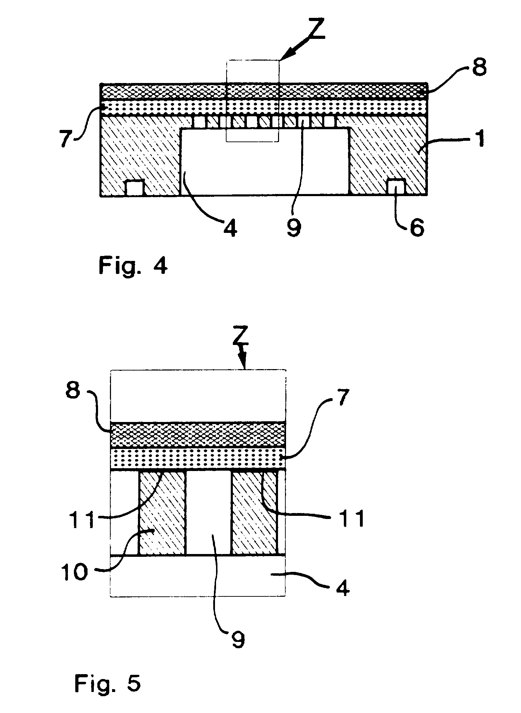

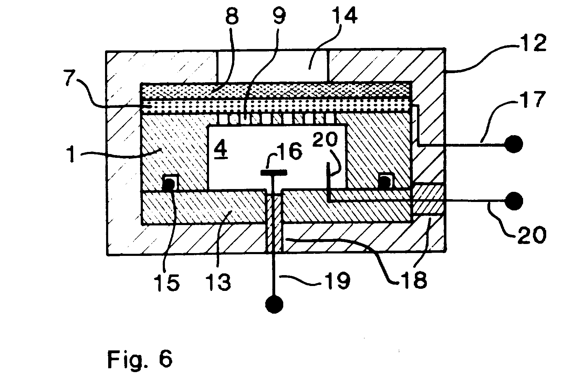

In Figur 1 ist im Schnitt ein noch unbehandelter Stützkörper (1) aus Silber in einer Dicke von etwa 2 mm und mit einem kreisförmigen Durchmesser von 10 mm dargestellt. Zur Vorbereitung der Aufbringung von Belag (7) und Membranschicht (8) ist seine Vorderseite (2) poliert. Als nächster Arbeitsschritt werden in den Stützkörper (1) die für den späteren Betrieb notwendigen Strukturen von seiner Rückseite her eingearbeitet (Fig. 2). Ein wesentlicher Teil des Stützkörpers (1) wird durch eine Ausnehmung (4) bis nahe an die Vorderseite (2) weggenommen, wobei in der noch stehenbleibenden Stützschicht (3) Vertiefungen (5) eingearbeitet sind, die als Vorbereitung der später herzustellenden Durchbrüche dienen. Weitere Montagehilfen, wie sie als Beispiel in der kreisförmig verlaufenden Ringnut (6) dargestellt sind, können ebenfalls in diesem Fertigungsschritt eingebracht werden. Der so vorbereitete Stützkörper erhält danach gemäß Figur 3 einen elektrisch leitfähigen Belag (7), welcher auf die Vorderseite (2) aufgesputtert ist. Der Belag (7) besteht aus einem edleren Metall als der Stützkörper (1). Hierfür kommen Metalle wie Gold, Platin oder Palladium in Frage. Über den auf der Stützschicht (3) fest haftenden Sputterbelag (7) wird über einen Polymerisationsvorgang eine Membranschicht (8) fest aufgebracht. Als geeignetes Polymer bietet sich ein Perfluorpolymer an, welches über den Vorgang einer Plasmapolymerisation als sehr dünne Schicht aufgetragen ist. Nachdem der Belag (7) und die Schicht (8) aufgebracht sind, wird die Weiterbehandlung des Stützkörpers (1) fortgesetzt (Figur 4). Die Vertiefungen (5) werden bis hin zum Belag (7) im Material der Stützschicht (3) weiter abgetragen. Sie werden somit zu Kanälen (9) vertieft, die von der Ausnehmung (4) bis hin zur Rückseite des Belages (7) reichen. Als haftende Befestigung des Belags (7) auf dem Stützkörper (1) bleibt im Bereich der Ausnehmung (4) die Stirnfläche (11) des Kanalsteges (10) übrig. An der Stirnfläche (11) ist ein für den Elektrolyten, welcher bei fertig zusammengebauten Meßfühler nach Figur 6 in die Ausnehmung (4) eingefüllt ist, undurchdringbarer Haftbereich, in den er nicht hineinzukriechen vermag. Somit ist, wie in Figur 5 der Einzelheit (Z) deutlich gemacht, der für die elektrochemische Nachweisreaktion maßgebliche Reaktionsbereich ausschließlich durch die Wandung der Kanäle (9) einerseits und der freigelegten Rückseite des elektrisch leitfähigen Belages (7) begrenzt. Durch die Ausformung der Kanäle (9) mit Hilfe z.B. der Ätztechnik lassen sich Kanaltiefen erstellen, welche ein Durchmesser / Längen-Verhältnis zwischen 1 und 100 aufweisen und die elektrochemische Reaktion vollständig im Raum des Kanals (9) ablaufen lassen. Es wird dadurch verhindert, daß Reaktionsprodukte aus dem Kanal (9) in den Elektrolytraum der Ausnehmung (4) eindiffundieren und für die Nachweisreaktion nicht erfaßbar werden.

Ein fertig montierter Meßfühler mit dem wie oben dargestellt präparierten Stützkörper (1) ist in Figur 6 gezeigt. Ein Kunststoffgehäuse (12) umspannt den Stützkörper (1) sowie die Membranschicht (8) und einen Gehäuseboden (13), welcher mittels einer Ringdichtung (15) in der Ringnut (6) gegenüber der als Elektrolytraum dienenden Ausnehmung (4) abgedichtet ist. Zwischen Gehäuseboden (13) und Stützkörper (1) ist ebenfalls eine Elektrode (20) als Referenzelektrode eingespannt und durch eine Durchführung (18) aus dem Gehäuse (12) hinausgeführt. Am Stützkörper (1) ist ein elektrischer Kontakt (17) angebracht. Im Elektrolytraum (4) befindet sich eine Gegenelektrode (16) mit einem durch eine weitere Durchführung (18) herausgeführten Elektrodenanschluß (19).

Zur Messung wird der Meßfühler einer die Nachweisbestandteile enthaltenden gasförmigen Probe ausgesetzt, welche über eine Durchlaßöffnung (14) im Gehäuse (12) zur Membranschicht (8) vordringen kann. Durch die Membranschicht (8) diffundieren nur solche Moleküle, für welche sie durchlässig ist. Nach deren Durchtritt durch den Belag (7) reagieren diese nachzuweisenden Moleküle an der Grenzfläche Elektrolyt im Kanal (9)/Oberfläche des Belages (7)/Membran (8) und bilden Reaktionsprodukte. Hierbei wird an der durch den Belag (7) und den Durchbruch bzw. Kanal (9) gebildeten Meßelektrode ein elektrisches Signal erzeugt, das durch Abgriff an dem Signalanschluß (17) und Elektrodenanschluß (19) zu einem nicht dargestellten Meßgerät zugeführt wird. Der durch die Meßreaktion erzeugte Strom wird in einem kalibrierten Meßgerät als Meßwert mit der Dimension "Konzentration" angezeigt.

Aus der Darstellung nach Figur 6 wird deutlich, daß durch den günstigen Aufbau keine Abdichtprobleme für die Abdichtung des Elektrolytraumes (4) gegenüber der Umgebung entstehen: Die fest aneinanderhaftenden Teile (7) und Schicht (8) auf dem Stützkörper (1) bedürfen keiner weiteren Abdichtung, und der Signalanschluß (17) kann in einfacher Weise mit der gut durchführbaren mechanischen Abdichtung des Stützkörpers (1) mit dem Gehäuseboden (13) eingearbeitet werden. Solche Dichtmaßnahmen sind beherrschbar und bieten keine besonderen Schwierigkeiten.

## Patentansprüche

1. Meßfühler zum Nachweis von gasförmigen Bestandteilen mit einer elektrochemischen Meßzelle, welche eine Meßelektrode (7) und eine Gegenelektrode (16) in einem Elektrolyten besitzt, wobei der Elektrolytraum (4) gegenüber der die Nachweisbestandteile enthaltenden Umgebung über eine für die Bestandteile permeablen, für den Elektrolyten undurchlässigen Membran (8) abgeteilt ist, welche auf ihrer dem Elektrolyten zugewandten Fläche mit einem permeablen, elektrisch leitfähigen Belag (7) als Meßelektrode versehen ist, wobei die Membran (8) mit dem Belag (7) auf einem Stützkörper (1) aufgebracht sind, der mindestens einen mit dem Elektrolyten gefüllten Durchbruch (9) aufweist, durch den der Elektrolyt bis zum Belag (7) vordringt, der zur Bildung als Meßelektrode mit einem elektrischen Signalanschluß (17) in Verbindung steht, dadurch gekennzeichnet, daß der Belag (7) als Haftverbinder für die Membran (8) und den Stützkörper (1) derart ausgebildet ist, daß er bezüglich des Elektrolyten einen in lateraler Richtung zwischen dem Belag (7) und dem Stützkörper (1) undurchlässigen Haftbereich (11) bildet und daß die Abdichtung bezüglich des Elektrolyten zwischen Membran (8) und Stützkörper (1) ausschließlich über den Belag (7) erfolgt, wobei der Belag (7) auf der geschlossenen Vorderseite (2) des Stützkörpers haftend aufgebracht ist und die Membran (8) als Schicht auf dem Belag (7) aufgetragen ist.

2. Verfahren zum Herstellen einer Meßelektrodenstruktur für einen Meßfühler zum Nachweis von gasförmigen Bestandteilen nach Anspruch 1, dadurch gekennzeichnet, daß auf der eine geschlossene Fläche bildenden Vorderseite (2) des Stützkörpers (1) der permeable, elektrisch leitfähige Belag als Meßelektrode (7) haftend aufgebracht, anschließend auf dem Belag (7) eine für die Nachweisbestandteile permeable, für den Elektrolyten undurchlässige Membranschicht (8) aufgetragen wird, und daß der den Elektrolyten aufnehmende Durchbruch (9) von der Rückseite ausgehend, die der den Belag (7) und die Membranschicht (8) tragenden Vorderseite (2) gegenüberliegt, durch zumindest teilweises Entfernen des Stützkörpers (1) in seiner vollständigen Schichtdicke bis zum Belag (7) gewonnen wird, so daß der Belag (7) als Haftverbinder für die Membran (8) und den Stützkörper (1) derart ausgebildet ist, daß er bezüglich des Elektrolyten einen in lateraler Richtung zwischen dem Belag (7) und dem Stützkörper (1) undurchlässigen Haftbereich (11) bildet und daß die Abdichtung bezüglich des Elektrolyten zwischen Membran (8) und Stützkörper (1) ausschließlich über den Belag (7) erfolgt.

3. Verfahren nach Anspruch 2, dadurch gekennzeichnet, daß der Durchbruch (9) in dem Stützkörper (1) vor Aufbringung des Belags (7) durch eine vorbereitende Anarbeitung einer Vertiefung (4, 5) vorgebildet wird, und daß die Anarbeitung so frühzeitig beendet wird, daß eine für die Aufbringung des Belags (7) und der Membranschicht (8) genügend stabile Stützschicht (3) mit geschlossener Oberfläche (2) stehenbleibt.

4. Verfahren nach Anspruch 2 oder 3, dadurch gekennzeichnet, daß die Vertiefung (4, 5) und der Durchbruch (9) durch einen Ätzvorgang gewonnen werden.

5. Verfahren nach einem der Ansprüche 2 bis 4, dadurch gekennzeichnet, daß der Belag (7) durch eine galvanische Abscheidung aufgetragen wird.

6. Verfahren nach Anspruch 4, dadurch gekennzeichnet, daß der Belag (7) aus einem edleren Metall besteht als ein in Metall ausgeführter Stützkörper (1).

7. Verfahren nach einem der Ansprüche 1 bis 6, dadurch gekennzeichnet, daß die Membranschicht (8) durch ein Polymerisations-Verfahren aufgetragen wird.

8. Verfahren nach einem der Ansprüche 1 bis 7, dadurch gekennzeichnet, daß der Durchbruch durch eine Vielzahl von im Stützkörper (1) freigelegten Kanälen (9) gebildet ist.

## Claims

1. Measuring probe for detecting gaseous components, having an electrochemical measuring cell, which has a measuring electrode (7) and a counter electrode (16) in an electrolyte, with the electrolyte chamber (4) being divided off in relation to the surroundings, which contain the components to be detected, by way of a membrane (8), which is permeable for the components and impermeable for the electrolyte and which on the surface that faces the electrolyte is provided with a permeable, electrically conductive coating (7) as a measuring electrode, with the membrane (8), together with the coating (7), being deposited on a supporting body (1), which has at least one opening (9), which is filled with the electrolyte and through which the electrolyte penetrates up to the coating (7), which is connected to an electric signal terminal (17) in order to form a measuring electrode, characterised in that the coating (7) is formed as an adhesive connector for the membrane (8) and the supporting body (1) in such a way that it forms in relation to the electrolyte an impermeable adhesive region (11) in a lateral direction between the coating (7) and the supporting body (1), and in that the sealing in respect of the electrolyte takes place between membrane (8) and supporting body (1) exclusively by way of the coating (7), with the coating (7) being deposited in an adhesive manner on the closed front side (2) of the supporting body and the membrane (8) being applied to the coating (7) as a layer.

2. Method for producing a measuring-electrode structure for a measuring probe for detecting gaseous components according to claim 1, characterised in that the permeable, electrically conductive coating as a measuring electrode (7) is deposited in an adhesive manner on the front side (2) of the supporting body (1), which front side forms a closed surface, and a membrane layer (8), which is permeable for the components to be detected and impermeable for the electrolyte, is subsequently applied to the coating (7), and in that, starting from the rear side, which lies opposite the front side (2), which supports the coating (7) and the membrane layer (8), the opening (9), which contains the electrolyte, is obtained by at least partial removal of the complete thickness of the layer of the supporting body (1) up to the coating (7), so that the coating (7) is formed as an adhesive connector for the membrane (8) and the supporting body (1) in such a way that it forms in relation to the electrolyte an impermeable adhesive region (11) in a lateral direction between the coating (7) and the supporting body (1), and in that the sealing in respect of the electrolyte takes place between membrane (8) and supporting body (1) exclusively by way of the coating (7).

3. Method according to claim 2, characterised in that before the coating (7) is deposited, the opening (9) in the supporting body (1) is prepared by a preliminary working of an indentation (4, 5), and in that the working is ended so early that there remains a supporting layer (3), which is sufficiently stable for depositing the coating (7) and the membrane layer (8) and has a closed surface (2).

4. Method according to claim 2 or 3, characterised in that the indentation (4, 5) and the opening (9) are obtained by an etching process.

5. Method according to one of the claims 2 to 4, characterised in that the coating (7) is applied by a galvanic precipitation.

6. Method according to claim 4, characterised in that the coating (7) consists of a more precious metal than a supporting body (1) which is made of metal.

7. Method according to one of the claims 1 to 6, characterised in that the membrane layer (8) is applied by a polymerisation process.

8. Method according to one of the claims 1 to 7, characterised in that the opening is formed by a plurality of ducts (9) uncovered in the supporting body (1).

## Revendications

1. Capteur de mesure pour la détection de composants gazeux, comportant une cellule de mesure électrochimique, qui possède une électrode de mesure (7) et une contre-électrode (16) dans un électrolyte, l'espace à électrolyte (4) étant isolé, vis-à-vis de l'atmosphère contenant les composants à détecter, par une membrane (8) perméable aux composants mais ne laissant pas passer l'électrolyte, membrane qui est pourvue, sur sa surface tournée du côté de l'électrolyte, d'un revêtement (7) perméable et conduisant l'électricité, servant d'électrode de mesure, la membrane (8) pourvue du revêtement (7) étant disposée sur un corps formant appui (1) qui présente au moins un perçage (9) rempli par l'électrolyte, à travers lequel l'électrolyte arrive jusqu'au niveau du revêtement (7), qui est relié, pour servir d'électrode de mesure, à un raccord de signal (17) électrique, caractérisé en ce que le revêtement (7), pour permettre l'adhésion de la membrane (8) et du corps formant appui (1), est conçu de telle sorte qu'il constitue, vis-à-vis de l'électrolyte, une zone adhésive (11) imperméable, en direction latérale entre le revêtement (7) et le corps formant appui (1), et en ce que l'étanchéité, vis-à-vis de l'électrolyte, entre la membrane (8) et le corps formant appui (1) est obtenue exclusivement par le revêtement (7), le revêtement (7) étant appliqué de façon adhésive sur la face avant (2) fermée du corps formant appui et la membrane (8) étant appliquée en couche sur le revêtement (7).

2. Procédé de fabrication d'une structure d'électrodes de mesure destinée à un capteur de mesure pour la détection de composants gazeux selon la revendication 1, caractérisé en ce que, sur la face avant (2), formant une surface fermée, du corps formant appui (1), le revêtement (7) perméable, conducteur d'électricité et servant d'électrode de mesure, est appliqué de façon adhésive, qu'ensuite une couche formant membrane (8) perméable aux composants à détecter mais ne laissant pas passer l'électrolyte, est appliquée sur le revêtement (7), et en ce que le perçage (9) contenant l'électrolyte est ménagé à partir de la face arrière, qui est située à l'opposé de la face avant (2) qui porte le revêtement (7) et la couche formant membrane (8), par enlèvement au moins partiel du corps formant appui (1) sur toute l'épaisseur de sa couche, jusqu'au revêtement (7), de telle sorte que le revêtement (7) sert d'agent adhésif pour la membrane (8) et le corps formant appui (1) de façon à former, vis-à-vis de l'électrolyte, une zone adhésive imperméable (11) s'étendant, en direction latérale, entre le revêtement (7) et le corps formant appui (1), et de façon à ce que l'étanchéité, vis-à-vis de l'électrolyte, soit obtenue entre la membrane (8) et le corps formant appui (1) exclusivement au moyen du revêtement (7).

3. Procédé selon la revendication 2, caractérisé en ce que le perçage (9) présent dans le corps formant appui (1) est préformé, avant l'application du revêtement (7), en ménageant préalablement une cavité (4, 5), et en ce que cette opération est achevée suffisamment tôt pour que subsiste une couche formant appui (3) à surface fermée (2) suffisamment solide pour permettre l'application du revêtement (7) et de la couche formant membrane (8).

4. Procédé selon la revendication 2 ou 3, caractérisé en ce que la cavité (4, 5) et le perçage (9) sont obtnenus par corrosion.

5. Procédé selon l'une des revendications 2 à 4, caractérisé en ce que le revêtement (7) est appliqué par galvanisation.

6. Procédé selon la revendication 4, caractérisé en ce que le revêtement (7) est constitué en un métal plus précieux qu'un corps formant appui (1) en métal.

7. Procédé selon l'une des revendications 1 à 6, caractérisé en ce que la couche formant membrane (8) est appliquée par polymérisation.

8. Procédé selon l'une des revendications 1 à 7, caractérisé en ce que le perçage est constitué d'une pluralité de canaux (9) creusés dans le corps formant appui (1).
